# EUROPEAN PATENT SPECIFICATION

(11) **EP 3 541 646 B1**
(45) Date of publication and mention of the grant of the patent: **25.01.2023**
(21) Application number: 17812286.7
(22) Date of filing: 21.11.2017
(51) Int. Cl.: B60H 1/03, B60H 1/32, F25D 21/12, F25D 29/00, F25B 27/02, F25B 47/00, B60H 1/14, B60H 1/00

(54) **HVAC/R SYSTEM FOR A VEHICLE CARGO COMPARTMENT AND METHOD OF OPERATING AN HVAC/R SYSTEM FOR A VEHICLE CARGO COMPARTMENT**
HLK-SYSTEM FÜR EINEN FAHRZEUGLADERAUM UND VERFAHREN ZUM BETRIEB EINES HLK-SYSTEMS FÜR EINEN FAHRZEUGLADERAUM
SYSTÈME CVCR POUR UN COMPARTIMENT DE CHARGEMENT DE VÉHICULE ET PROCÉDÉ DE COMMANDE D'UN SYSTÈME CVCR POUR UN COMPARTIMENT DE CHARGEMENT DE VÉHICULE

(30) Priority: 21.11.2016 US 201662424884 P
(43) Date of publication of application: 25.09.2019
(73) Proprietor: Carrier Corporation, Palm Beach Gardens, FL 33418 (US)
(72) Inventor: SWAB, Michael, Acworth, GA 30102 (US)
(74) Representative: Dehns
(86) International application number: PCT/US2017/062839
(87) International publication number: WO 2018/094405

(56) References cited:
- EP-A1- 2 587 197
- US-A- 4 172 493
- US-A- 5 538 472
- US-A1- 2002 129 613
- US-A1- 2005 081 548
- US-A1- 2008 196 877
- US-A1- 2015 052 913
- US-B2- 8 887 843

## Description

### CROSS-REFERENCE TO RELATED APPLICATION

The presently disclosed invention generally relates to heating, ventilation, air conditioning, and refrigeration (HVAC/R) systems, and more particularly, to a system and method of operating an HVAC/R system mounted on a vehicle cargo compartment.

Trucks and other vehicles often transport goods that require a refrigerated or otherwise temperature-controlled cargo compartment. Such vehicles often include a transport refrigeration unit (TRU) that operates to maintain a set point temperature of the cargo compartment. Such TRUs include one or more controllers, compressors, condensers, control valves, expansion valves, evaporator coils, and/or other components typically found in an HVAC/R unit to maintain one or more set point temperatures.

The TRU may be powered in a normal cooling mode to circulate refrigerant to the relatively cool evaporator in the vehicle cargo compartment in order to cool the air in the vehicle cargo compartment and maintain a low set point temperature of the system. However, frost can accumulate on the evaporator in the vehicle cargo compartment and/or the temperature of the vehicle cargo compartment may drop below the set point of the system. Therefore, the system must operate in a heating mode. In conventional systems, an engine, such as the TRU engine, is started and run to generate and supply heat to the coolant circuit for circulation to a heat exchanger in the vehicle cargo unit to raise the temperature to reach the set point or to defrost the evaporator. However, starting and running the engine whenever even a small amount of heat is required leads to excess fuel consumption, unnecessary wear on the engine and other components, and air and noise pollution.

EP 2 587 197 A1 discloses a system wherein a cooling unit is defrosted by a heated fluid.

US 4 172 493 A discloses a transport temperature control system wherein an internal heat exchanger is heated by a fluid using heat from a heat source.

Therefore, there exists a need for an HVAC/R system for a vehicle cargo compartment and method of operating an HVAC/R system for a vehicle cargo compartment that more efficiently raises the air temperature in the vehicle cargo compartment.

In accordance with an aspect of the present invention, an HVAC/R system for a vehicle cargo compartment is provided. The HVAC/R system includes an external heat exchanger disposed outside of the vehicle cargo compartment and configured to transfer heat from ambient air to a fluid, an internal heat exchanger disposed inside of the vehicle cargo compartment and configured to transfer heat from the fluid to the vehicle cargo compartment; a fluid circuit configured to selectively circulate the fluid between the external heat exchanger and the internal heat exchanger, a second fluid circuit configured to selectively circulate the fluid between the external heat exchanger and an engine, the engine transferring heat to the fluid, and a controller configured to control a method of operating the system. The method includes circulating a fluid between an internal heat exchanger and an external heat exchanger, circulating the fluid between the engine and the external heat exchanger when the ambient air is below a predetermined temperature, transferring heat from ambient air to the fluid in the external heat exchanger when the ambient air is above the predetermined temperature, heating the fluid using the engine when the ambient air is below the predetermined temperature, and transferring heat from the fluid in the internal heat exchanger to the vehicle cargo compartment.

The external heat exchanger may be configured to transfer heat from ram air to the fluid when the vehicle cargo compartment is moving. The external heat exchanger may be configured to transfer heat from ambient air to the fluid when the vehicle cargo compartment is stationary. The system may further include an evaporator heat exchanger and an evaporator fan disposed inside of the vehicle cargo compartment, the internal heat exchanger may transfer heat from the fluid to the vehicle cargo compartment with the evaporator fan. The fluid circuit may include a pump configured to selectively circulate the fluid. The pump may be configured to be operated under battery power.

In accordance with another aspect of the present invention, a vehicle is provided. The vehicle includes a vehicle compartment, a transport refrigeration unit including an engine, and the HVAC/R system of the first aspect provided for in the vehicle compartment.

In accordance with another aspect of the present invention, a method of operating an HVAC/R system in a vehicle cargo compartment is provided. The HVAC/R system includes an external heat exchanger disposed outside of the vehicle cargo compartment and configured to transfer heat from ambient air to a fluid, an internal heat exchanger disposed inside of the vehicle cargo compartment and configured to transfer heat from the fluid to the vehicle cargo compartment; a fluid circuit configured to selectively circulate the fluid between the external heat exchanger and the internal heat exchanger, a second fluid circuit configured to selectively circulate the fluid between the external heat exchanger and an engine, the engine transferring heat to the fluid, and a controller configured to control the method of operating the system. The method includes circulating a fluid between the internal heat exchanger and the external heat exchanger, circulating the fluid between the engine and the external heat exchanger when the ambient air is below a predetermined temperature, transferring heat from ambient air to the fluid in the external heat exchanger when the ambient air is above the predetermined temperature, heating the fluid using the engine when the ambient air is below the predetermined temperature, and transferring heat from the fluid in the internal heat exchanger to the vehicle cargo compartment.

The method may further include transferring heat from the fluid in the internal heat exchanger to the vehicle cargo compartment may occur when the fluid is below a set point temperature. Circulating the fluid between the internal heat exchanger and the external heat exchanger may occur when the fluid is below a set point temperature. Circulating the fluid may include pumping the fluid under battery power. Transferring heat from the ambient air to the fluid in the external heat exchanger may include moving the external heat exchanger through the ambient air. Transferring heat from the fluid to the vehicle cargo compartment in the internal heat exchanger may include forcing air through the internal heat exchanger.

The present invention will be better understood by reference to the following description of various exemplary embodiments of the present invention taken in conjunction with the accompanying drawings, wherein:
FIG. 1 is a schematic diagram of an HVAC/R system in accordance with an embodiment of the present invention; and
FIG. 2 illustrates a method of operating an HVAC/R system in accordance with an embodiment of the present invention.

For the purposes of promoting an understanding of the principles of the present invention, reference will now be made to the embodiments illustrated in the drawings, and specific language will be used to describe the same. It will nevertheless be understood that no limitation of the scope of this invention is thereby intended, but that the scope is defined by the claims.

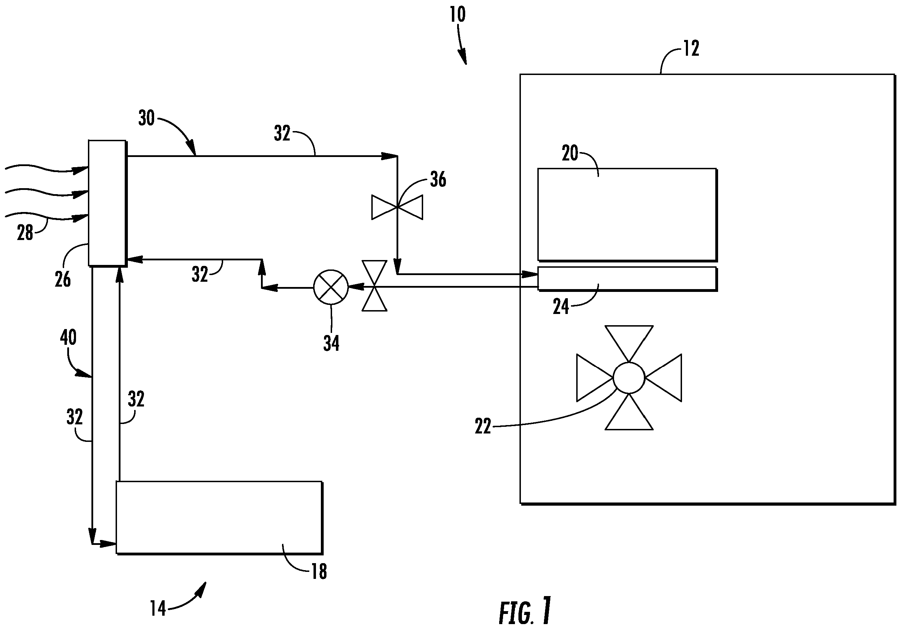

FIG. 1 illustrates a schematic diagram of an embodiment of a heating, ventilation, air conditioning, and refrigeration (HVAC/R) system 10 in an embodiment of the present invention. In an embodiment, the HVAC/R system 10 is provided for a vehicle cargo compartment 12. In an embodiment, the vehicle cargo compartment 12 is a trailer or other portion of a vehicle 14 that may be heated or cooled. The vehicle 14 includes an engine or motor (not shown), such as an internal combustion engine in a non-limiting example, to provide motive power for the vehicle 14. The vehicle 14 in another embodiment includes a transport refrigeration unit (TRU) that includes a TRU engine 18. The HVAC/R system 10 forms part of the TRU in an embodiment.

The HVAC/R system 10 of an embodiment includes an evaporator 20 in fluid communication with or disposed at least partially inside the vehicle cargo compartment 12. The HVAC/R system 10 of an embodiment further includes an internal heat exchanger 24 in fluid communication with or disposed at least partially inside the vehicle cargo compartment 12. The HVAC/R system 10 of an embodiment further includes a fan 22 or other device capable of forcing air over or through the evaporator 20 and/or the internal heat exchanger 24. In an embodiment, the evaporator 20 is adjacent and/or coupled to the internal heat exchanger 24 such that the fan 22 forces air in the vehicle cargo compartment 12 over both the internal heat exchanger 24 and the evaporator 20.

The system 10 includes an external heat exchanger 26 disposed outside of the vehicle cargo compartment 12 or another location in fluid communication with ambient air 28. The external heat exchanger 26 of an embodiment is mounted at a front portion of the vehicle cargo compartment 12 for exposure to the ambient air 28 over its surface area.

The external heat exchanger 26 is configured to transfer heat from ram air, or the ambient air 28 being forced along, against, or through the external heat exchanger 26, to a fluid 32 when the vehicle cargo compartment 12 is moving. Therefore, heat from the ambient air 28 is added to the fluid 32 in the external heat exchanger 26 in one embodiment by moving the external heat exchanger 26 through the ambient air 28. When the vehicle cargo compartment 12 is stationary, the external heat exchanger 26 is configured to transfer heat from the ambient air 28 to the fluid 32, such as by natural convection in a non-limiting example.

A fluid circuit 30 circulates the fluid 32 between the external heat exchanger 26 and the internal heat exchanger 24. The fluid 32 is a liquid engine coolant in one non-limiting example. The fluid 32 may be any fluid capable of transferring heat from or to a heat exchanger in additional embodiments. A pump 34 circulates the fluid 32 within the fluid circuit 30 in an embodiment. The pump 34 of one embodiment operates under battery power to circulate the fluid 32 without the aid of the vehicle engine or TRU engine 18. One or more valves 36 allow or restrict circulation of the fluid 32 through the fluid circuit 30. A controller (not shown) controls operation of the system 10, including the pump 34 and the valves 36, according to one or more algorithms, sensed values, stored values, and/or local or remote command inputs as recognized by those having ordinary skill in the art. The controller may selectively operate the pump 34 and/or one or more of the valves 36 through one or more output signals from the controller according to one or more set points of the system 10.

In a non-limiting embodiment, the air temperature in the vehicle cargo compartment 12 may be below a desired set point of the system 10, the system 10 may require a defrost operation to remove frost from the evaporator 20, or another condition may exist that requires heat to be added to the fluid 32 and/or the vehicle cargo compartment 12. When the temperature of the ambient air 28 is above a predetermined temperature, such as above 32 degrees Fahrenheit or 0 degrees Celsius in one non-limiting example, the engine 18 is controlled to be shut down or not operational, and the pump 34 circulates the fluid 32 via battery power through the fluid circuit 30 to allow the ambient air 28 to add heat to the fluid 32 at the external heat exchanger 26. The fluid 32 continues to circulate as the internal heat exchanger 24 allows transfer of the heat from the fluid 32 to the vehicle cargo compartment 12 to defrost the evaporator 20 and/or raise the temperature of the air in the vehicle cargo compartment 12, such as to the desired set point of the system 10.

The system 10 further includes a second fluid circuit 40 configured to selectively circulate the fluid 32 between the external heat exchanger 26 and the engine 18. In one embodiment, the engine 18 transfers heat to the fluid 32. In an embodiment not shown, the second fluid circuit 40 circulates fluid 32 between the external heat exchanger 26 and the vehicle engine or another heat source. When the ambient air 28 is below the predetermined temperature, normal operation of the TRU engine 18 commences. During such operation in one embodiment, the second fluid circuit 40 is configured to circulate the fluid 32 between the external heat exchanger 26 and the engine 18.

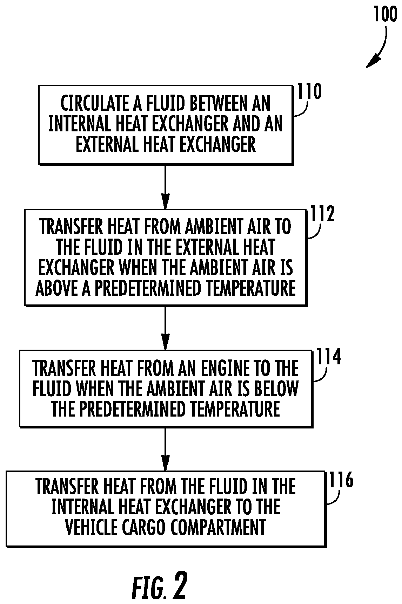

Referring now to FIG. 2, a method 100 of operating the HVAC/R system 10 is provided. The method 100 includes circulating, at step 110, the fluid 32 between the internal heat exchanger 24 and the external heat exchanger 26. As in the non-limiting embodiment discussed above, the air temperature in the vehicle cargo compartment 12 may be below a desired set point of the system 10, the system 10 may require a defrost operation to remove frost from the evaporator 20, and/or another condition may exist that requires heat to be added to the fluid 32 and/or the vehicle cargo compartment 12. Following the discussion above, the method 100 further includes transferring, at step 112, heat from the ambient air 28 to the fluid 32 in the external heat exchanger 26 when the ambient air 28 is above the predetermined temperature.

The method 100 further includes transferring, at step 114, heat from the engine 18 to the fluid 32 when the ambient air 28 is below the predetermined temperature. When the temperature of the ambient air 28 is below the predetermined temperature, such as below 32 degrees Fahrenheit or 0 degrees Celsius in a non-limiting example, the engine 18 operates normally to circulate the fluid 32 through the fluid circuit 30 and the second fluid circuit 40 and to add heat from the engine 18 to the fluid 32. The method 100 further includes transferring, at step 116, heat from the fluid 32 in the internal heat exchanger 24 to the vehicle cargo compartment 12. The fluid 32 continues to circulate as the internal heat exchanger 24 allows transfer of the heat from the fluid 32 to the vehicle cargo compartment 12 to defrost the evaporator 20 and/or raise the temperature of the air in the vehicle cargo compartment 12, such as to the desired set point of the system 10. The predetermined temperature is between -3,8 and 4,4 degrees Celsius (25 and 40 degrees Fahrenheit) in one embodiment, and between -1,1 and 1,6 degrees Celsius (30 and 40 degrees Fahrenheit) in another embodiment.

The system 10 and method 100 disclosed herein raises the temperature in the vehicle cargo compartment 12, such as to reach a desired set point temperature or defrost the evaporator 20. Rather than starting and running the engine 18 whenever even a small amount of heat is required, ambient air 28 above the predetermined temperature is utilized to accomplish the goal of increasing the air temperature in the vehicle cargo compartment 12. The system 10 and method 100 described herein more efficiently and effectively raises the air temperature in the vehicle cargo compartment 12 without unnecessary consumption of fuel by or wear on the engine 18 and/or contributing to air and noise pollution otherwise caused by the engine 18.

While the invention has been illustrated and described in detail in the drawings and foregoing description, the same is to be considered illustrative.

## Claims

1. An HVAC/R system (10), when mounted on a vehicle cargo compartment (12), the HVAC/R system comprising:
an external heat exchanger (26) disposed outside of the vehicle cargo compartment and configured to transfer heat from ambient air to a fluid (32);
an internal heat exchanger (24) disposed inside of the vehicle cargo compartment (12) and configured to transfer heat from the fluid to the vehicle cargo compartment (12);
a first fluid circuit (30) configured to selectively circulate the fluid between the external heat exchanger (26) and the internal heat exchanger (24);
a second fluid circuit (40) configured to selectively circulate the fluid between the external heat exchanger (26) and an engine (18), the engine (18) transferring heat to the fluid; and
a controller configured to control operation of the system (10) according to a method comprising:
circulating the fluid (32) between the internal heat exchanger (24) and the external heat exchanger (26);
circulating the fluid between the engine (18) and the external heat exchanger (26) when
the ambient air is below a predetermined temperature; transferring heat from ambient air to the fluid in the external heat exchanger (26) when
the ambient air is above the predetermined temperature; heating the fluid using the engine (18) when the ambient air is below the predetermined
temperature; and transferring heat from the fluid in the internal heat exchanger (24) to the vehicle cargo compartment (12).

2. The system of claim 1, wherein the external heat exchanger (26) is configured to transfer heat from ram air to the fluid when the vehicle cargo compartment (12) is moving.

3. The system of claim 1, wherein the external heat exchanger (26) is configured to transfer heat from ambient air (28) to the fluid when the vehicle cargo compartment (12) is stationary.

4. The system of claim 1, further comprising an evaporator heat exchanger (20) and an evaporator fan (22) disposed inside of the vehicle cargo compartment, the internal heat exchanger (24) transferring heat from the fluid to the vehicle cargo compartment (12) with the evaporator fan (22)

5. The system of claim 1, wherein the first fluid circuit includes a pump (34) configured to selectively circulate the fluid.

6. The system of claim 5, wherein the pump (34) is configured to be operated under battery power

7. A vehicle (14) comprising:
a vehicle compartment (12);
a transport refrigerant unit including an engine (18); and
the system of claim 1 provided for the vehicle compartment (12).

8. A method of operating an HVAC/R system (10) mounted on a vehicle cargo compartment (12), the HVAC/R system (10) comprising:
an external heat exchanger (26) disposed outside of the vehicle cargo compartment (12) and configured to transfer heat from ambient air to a fluid (32);
an internal heat exchanger (24) disposed inside of the vehicle cargo compartment (12) and configured to transfer heat from the fluid to the vehicle cargo compartment (12);
a first fluid circuit (30) configured to selectively circulate the fluid between the external heat exchanger (26) and the internal heat exchanger (24), and
a second fluid circuit (40) configured to selectively circulate the fluid between the external heat exchanger (26) and an engine (18), the engine (18) transferring heat to the fluid;
the method comprising:
circulating the fluid (32) between the internal heat exchanger (24) and the external heat exchanger (26);
circulating the fluid between the engine (18) and the external heat exchanger (26) when the ambient air is below a predetermined temperature;
transferring heat from ambient air to the fluid in the external heat exchanger (26) when the ambient air is above the predetermined temperature;
heating the fluid using the engine (18) when the ambient air is below the predetermined temperature; and
transferring heat from the fluid in the internal heat exchanger (24) to the vehicle cargo compartment (12).

9. The method of claim 8, wherein transferring heat from the fluid in the internal heat exchanger (24) to the vehicle cargo compartment (12) occurs when an air temperature in the vehicle cargo compartment (12) is below a set point temperature.

10. The method of claim 8, wherein circulating the fluid between the internal heat exchanger (24) and the external heat exchanger (26) occurs when an air temperature in the vehicle cargo compartment (12) is below a set point temperature.

11. The method of claim 8, wherein circulating the fluid includes pumping the fluid under battery power.

12. The method of claim 8, wherein transferring heat from the fluid to the vehicle cargo compartment (12) in the internal heat exchanger (24) includes forcing air through the internal heat exchanger (24).

## Patentansprüche

1. HLK/R-System (10), wenn es auf einem Fahrzeugladeraum (12) montiert ist, wobei das HLK/R-System Folgendes umfasst:
einen externen Wärmetauscher (26), der außerhalb des Fahrzeugladeraums angeordnet und ausgelegt ist, um Wärme aus der Umgebungsluft auf ein Fluid (32) zu übertragen;
einen internen Wärmetauscher (24), der innerhalb des Fahrzeugladeraums (12) angeordnet und ausgelegt ist, um Wärme von dem Fluid auf den Fahrzeugladeraum (12) zu übertragen;
einen ersten Fluidkreislauf (30), der ausgelegt ist, um das Fluid selektiv zwischen dem externen Wärmetauscher und dem internen Wärmetauscher (24) zirkulieren zu lassen;
einen zweiten Fluidkreislauf (40), der ausgelegt ist, das Fluid selektiv zwischen dem externen Wärmetauscher (26) und einer Kraftmaschine (18) zirkulieren zu lassen, wobei die Kraftmaschine (18) Wärme auf das Fluid überträgt; und
eine Steuereinheit, die ausgelegt ist, den Betrieb des Systems gemäß einem Verfahren zu steuern, das Folgendes umfasst:
Zirkulieren des Fluids (32) zwischen dem internen Wärmetauscher (24) und dem externen Wärmetauscher (26);
Zirkulieren des Fluids zwischen der Kraftmaschine (18) und dem externen Wärmetauscher (26), wenn die Umgebungsluft unter einer vorbestimmten Temperatur liegt;
Übertragen von Wärme aus der Umgebungsluft auf das Fluid in dem externen Wärmetauscher (26), wenn die Umgebungsluft über der vorbestimmten Temperatur liegt;
Erwärmen des Fluids unter Verwendung der Kraftmaschine (18), wenn die Umgebungsluft unter der vorbestimmten Temperatur liegt; und
Übertragen von Wärme aus dem Fluid im internen Wärmetauscher (24) an den Fahrzeugladeraum (12).

2. System nach Anspruch 1, wobei der externe Wärmetauscher (26) ausgelegt ist, um Wärme (12) von der Stauluft auf das Fluid zu übertragen, wenn der Fahrzeugladeraum in Bewegung ist.

3. System nach Anspruch 1, wobei der externe Wärmetauscher (26) ausgelegt ist, um Wärme (12) aus der Umgebungsluft (28) auf das Fluid zu übertragen, wenn der Fahrzeugladeraum (12) stillsteht.

4. System nach Anspruch 1, weiter umfassend einen Verdampfer-Wärmetauscher (20) und ein Verdampfergebläse (22), die im Fahrzeugladeraum angeordnet sind, wobei der interne Wärmetauscher (24) mit dem Verdampfergebläse (22) Wärme aus dem Fluid auf den Fahrzeugladeraum (12) überträgt.

5. System nach Anspruch 1, wobei der erste Fluidkreislauf eine Pumpe (34) einschließt, die zum selektiven Zirkulieren des Fluids ausgelegt ist.

6. System nach Anspruch 5, wobei die Pumpe (34) ausgelegt ist, um im Batteriebetrieb betrieben zu werden.

7. Fahrzeug (14), umfassend:
einen Fahrzeugraum (12);
eine Transportkühleinheit, die eine Kraftmaschine (18) einschließt; und
das für den Fahrzeugraum (12) bereitgestellte System nach Anspruch 1.

8. Verfahren zum Betreiben eines HLK/R-Systems (10), das auf einem Fahrzeugladeraum (12) montiert ist, wobei das HLK/R-System (10) Folgendes umfasst:
einen externen Wärmetauscher (26), der außerhalb des Fahrzeugladeraums (12) angeordnet und ausgelegt ist, um Wärme aus der Umgebungsluft auf ein Fluid (32) zu übertragen;
einen internen Wärmetauscher (24), der innerhalb des Fahrzeugladeraums (12) angeordnet und ausgelegt ist, um Wärme von dem Fluid auf den Fahrzeugladeraum (12) zu übertragen,
einen ersten Fluidkreislauf (30), der ausgelegt ist, um das Fluid selektiv zwischen dem externen Wärmetauscher (26) und dem internen Wärmetauscher (24) zirkulieren zu lassen; und
einen zweiten Fluidkreislauf (40), der ausgelegt ist, das Fluid selektiv zwischen dem externen Wärmetauscher (26) und einer Kraftmaschine (18) zirkulieren zu lassen, wobei die Kraftmaschine (18) Wärme auf das Fluid überträgt;
wobei das Verfahren Folgendes umfasst:
Zirkulieren des Fluids (32) zwischen dem internen Wärmetauscher (24) und dem externen Wärmetauscher (26);
Zirkulieren des Fluids zwischen der Kraftmaschine (18) und dem externen Wärmetauscher (26), wenn die Umgebungsluft unter einer vorbestimmten Temperatur liegt;
Übertragen von Wärme aus der Umgebungsluft auf das Fluid in dem externen Wärmetauscher (26), wenn die Umgebungsluft über der vorbestimmten Temperatur liegt;
Erwärmen des Fluids unter Verwendung der Kraftmaschine (18), wenn die Umgebungsluft unter der vorbestimmten Temperatur liegt; und
Übertragen von Wärme aus dem Fluid im internen Wärmetauscher (24) an den Fahrzeugladeraum (12).

9. Verfahren nach Anspruch 8, wobei das Übertragen von Wärme vom Fluid im internen Wärmetauscher (24) auf den Fahrzeugladeraum (12) erfolgt, wenn eine Lufttemperatur im Fahrzeugladeraum (12) unter einer eingestellten Sollwerttemperatur liegt.

10. Verfahren nach Anspruch 8, wobei das Zirkulieren des Fluids zwischen dem internen Wärmetauscher (24) und dem externen Wärmetauscher (26) erfolgt, wenn eine Lufttemperatur im Fahrzeugladeraum (12) unter einer eingestellten Sollwerttemperatur liegt.

11. Verfahren nach Anspruch 8, wobei das Zirkulieren des Fluids das Pumpen des Fluids im Batteriebetrieb einschließt.

12. Verfahren nach Anspruch 8, wobei das Übertragen von Wärme von dem Fluid auf den Fahrzeugladeraum (12) im internen Wärmetauscher (24) das Drücken von Luft durch den internen Wärmetauscher (24) einschließt.

## Revendications

1. Système HVAC/R (10), lorsqu'il est monté sur un compartiment à bagages de véhicule (12), le système HVAC/R comprenant :
un échangeur de chaleur externe (26) disposé à l'extérieur du compartiment à bagages de véhicule et configuré pour transférer de la chaleur d'un air ambiant à un fluide (32) ;
un échangeur de chaleur interne (24) disposé à l'intérieur du compartiment à bagages de véhicule (12) et configuré pour transférer de la chaleur du fluide au compartiment à bagages de véhicule (12) ;
un premier circuit de fluide (30) configuré pour faire circuler sélectivement le fluide entre l'échangeur de chaleur externe et l'échangeur de chaleur interne (24) ;
un second circuit de fluide (40) configuré pour faire circuler sélectivement le fluide entre l'échangeur de chaleur externe (26) et un moteur (18), le moteur (18) transférant de la chaleur au fluide ; et
un dispositif de commande configuré pour commander un fonctionnement du système selon un procédé comprenant :
la circulation du fluide (32) entre l'échangeur de chaleur interne (24) et l'échangeur de chaleur externe (26) ;
la circulation du fluide entre le moteur (18) et l'échangeur de chaleur externe (26) lorsque l'air ambiant est au-dessous d'une température prédéterminée ;
le transfert de chaleur d'un air ambiant au fluide dans l'échangeur de chaleur externe (26) lorsque l'air ambiant est au-dessus de la température prédéterminée ;
le chauffage du fluide en utilisant le moteur (18) lorsque l'air ambiant est au-dessous de la température prédéterminée ; et
le transfert de chaleur du fluide dans l'échangeur de chaleur interne (24) au compartiment à bagages de véhicule (12).

2. Système selon la revendication 1, dans lequel l'échangeur de chaleur externe (26) est configuré pour transférer de la chaleur (12) d'un air dynamique au fluide lorsque le compartiment à bagages de véhicule est en mouvement.

3. Système selon la revendication 1, dans lequel l'échangeur de chaleur externe (26) est configuré pour transférer de la chaleur (12) d'un air ambiant (28) au fluide lorsque le compartiment à bagages de véhicule (12) est immobile.

4. Système selon la revendication 1, comprenant en outre un échangeur de chaleur évaporateur (20) et un ventilateur évaporateur (22) disposés à l'intérieur du compartiment à bagages de véhicule, l'échangeur de chaleur interne (24) transférant de la chaleur du fluide au compartiment à bagages de véhicule (12) avec le ventilateur évaporateur (22).

5. Système selon la revendication 1, dans lequel le premier circuit de fluide inclut une pompe (34) configurée pour faire circuler sélectivement le fluide.

6. Système selon la revendication 5, dans lequel la pompe (34) est configurée pour fonctionner avec une énergie de batterie.

7. Véhicule (14) comprenant :
un compartiment de véhicule (12) ;
une unité réfrigérante de transport incluant un moteur (18) ; et
le système selon la revendication 1 fourni pour le compartiment de véhicule (12).

8. Procédé de fonctionnement d'un système HVAC/R (10) monté sur un compartiment à bagages de véhicule (12), le système HVAC/R (10) comprenant :
un échangeur de chaleur externe (26) disposé à l'extérieur du compartiment à bagages de véhicule
(12) et configuré pour transférer de la chaleur d'un air ambiant à un fluide (32) ;
un échangeur de chaleur interne (24) disposé à l'intérieur du compartiment à bagages de véhicule (12) et configuré pour transférer de la chaleur du fluide au compartiment à bagages de véhicule (12),
un premier circuit de fluide (30) configuré pour faire circuler sélectivement le fluide entre l'échangeur de chaleur externe (26) et l'échangeur de chaleur interne (24), et
un second circuit de fluide (40) configuré pour faire circuler sélectivement le fluide entre l'échangeur de chaleur externe (26) et un moteur (18), le moteur (18) transférant de la chaleur au fluide ;
le procédé comprenant :
la circulation du fluide (32) entre l'échangeur de chaleur interne (24) et l'échangeur de chaleur externe (26) ;
la circulation du fluide entre le moteur (18) et l'échangeur de chaleur externe (26) lorsque l'air ambiant est au-dessous d'une température prédéterminée ;
le transfert de chaleur d'un air ambiant au fluide dans l'échangeur de chaleur externe (26) lorsque l'air ambiant est au-dessus de la température prédéterminée ;
le chauffage du fluide en utilisant le moteur (18) lorsque l'air ambiant est au-dessous de la température prédéterminée ; et
le transfert de chaleur du fluide dans l'échangeur de chaleur interne (24) au compartiment à bagages de véhicule (12).

9. Procédé selon la revendication 8, dans lequel le transfert de chaleur du fluide dans l'échangeur de chaleur interne (24) au compartiment à bagages de véhicule (12) se déroule lorsqu'une température d'air dans le compartiment à bagages de véhicule (12) est au-dessous d'une température de point de consigne.

10. Procédé selon la revendication 8, dans lequel la circulation du fluide entre l'échangeur de chaleur interne (24) et l'échangeur de chaleur externe (26) se déroule lorsqu'une température d'air dans le compartiment à bagages de véhicule (12) est au-dessous d'une température de point de consigne.

11. Procédé selon la revendication 8, dans lequel la circulation du fluide inclut le pompage du fluide avec une énergie de batterie.

12. Procédé selon la revendication 8, dans lequel le transfert de chaleur du fluide au compartiment à bagages de véhicule (12) dans l'échangeur de chaleur interne (24) inclut le forçage d'air à travers l'échangeur de chaleur interne (24).
